# EUROPEAN PATENT SPECIFICATION

(11) **EP 1 084 623 B1**
(45) Date of publication and mention of the grant of the patent: **28.04.2004**
(21) Application number: 99118488.8
(22) Date of filing: 18.09.1999
(51) Int. Cl.: A23G 9/04, A23G 9/08, A23G 9/14

(54) **A process for the preparation of a frozen confection**
Verfahren zur Herstellung von Eiskonfekt
Procédé de préparation d'un article de confiserie glacée

(43) Date of publication of application: 21.03.2001
(73) Proprietor: Société des Produits Nestlé S.A., 1800 Vevey (CH)
(72) Inventor: Groh, Björn F., Marysville, OH 43040 (US); Bisperink, Christiaan, 1073 Savigny (CH)
(74) Representative: Thomas, Alain

(56) References cited:
- FR-A- 2 494 962
- GB-A- 1 137 368
- US-A- 4 431 682
- ARBUCKLE: "Ice Cream" 1986 , AVI , WESTPORT XP002127081 * page 213 - page 215 * * page 222 - page 225 * * page 224, line 27 - line 37 *
- DATABASE WPI Section Ch, Week 199004 Derwent Publications Ltd., London, GB; Class D13, AN 1990-028589 XP002127082 -& SU 1 374 465 A (REFRIG IND RES DES TECHN INST), 30 June 1989 (1989-06-30)

## Description

The present invention concerns a process for the preparation of a fat-containing, foamed, frozen confection.

It is known in the art that for the preparation of a fat-containing, foamed, frozen confection, such as ice-cream, it is necessary before proceeding with the freezing and with the hardening of said ice-cream to carry out a maturation. This maturation, or also called ageing, is a period wherein the mixture of ingredients after blending, homogenization and pasteurization (not necessarily in that order) is maintained for several hours at a temperature around some degrees C above the freezing point of the mixture.

Preferred ingredients of the fat-containing, foamed, frozen confection are water and/or fruit juices and/or milk, dairy and/or vegetable fat, milk derivatives and/or vegetable protein, carbohydrates including sugars, stabilizers and emulsifiers. The confection may contain flavoring and/or coloring ingredients. Sources of fats are dairy fat or vegetable fat, preferably hydrogenated palm, palmkernel, coconut and other fats are used. The stabilizer are taken from the group consisting of gelatin or polysaccharides such as starch, carrageenan, sodium alginate, sodium carboxymethyl-cellulose, guar gum, locust bean gum, pectin and similar proteins and polysaccharides. Emulsifier are taken from the group consisting of mono- and diacyl glycerides of fatty acids, polyoxyethylene sorbitan ester of fatty acids, lecithin, polyglycerol ester, mono- and di- saccharid ester of fatty ester, fruit acid ester of fatty acids, propylene glycol ester and egg yolk.

A typical way of producing the confection mix is to incorporate the solid ingredients into the hot liquid ingredients at a temperature around 50 to 70°C. The preparation is then pasteurized appropriately to reduce pathogenic microorganisms and homogenized to reduce the fat particle size and to produce a homogeneous mix. After these process steps the mix is cooled to some degrees C above the freezing point and stored at that temperature for several hours (maturation time). Then the mix is ready to be foamed and frozen. The final product is filled into its package and chilled or hardened [Arbuckle, W.S., in : 'Ice Cream' ; AVI-Van Nostrand Company Inc., New York, 1986, p.201-214].

One of the major roles of emulsifier typically used in frozen fat-containing confectionery is to displace some of the protein from the interface between the fat and the aqueous phase of the processed mix. This takes place during the maturation time. [Keeney, P.G. in : The ice cream review, 42, 1958, p. 26-45] Fat particles without their protective protein coat are more sensitive to agglomerate and will form fat particle clusters during further processing, i.e. whipping and/or freezing. Theses fat particle clusters will form a fat network around the gas bubbles and throughout the continuous phase and thereby stabilize the structure and stability of the final, foamed product. Furthermore it was shown that fat-soluble emulsifiers can help to speed-up the fat crystallization during the maturation time [Barfod, N.M. ; Krog, N. and Buchheim, W. in : Fat Science and Technology, Nr. :1, 1991, p. 24 - 29].

Emulsifier molecules are used for their activity at the interface between the emulsified fat and the aqueous phase. It is known that many emulsifier increase their functionality -which is to lower the interfacial tension between the fat and the aqueous phase- at lower temperatures. Several emulsifiers show additionally to the inverse temperature functionality a sudden, drastic increase in their functionality, that is a sudden drop in the interfacial tension down to values of around 1/10 of their previous interfacial tension values, at a specific temperature, which depends on the type and concentration of the emulsifier. The temperature at that drastic change in interfacial tension is referred to 'break temperature' in the literature. As example, mono- and diacyl propylen-glycol and glycerols show at temperatures below their specific 'break temperature' a drastically lower interfacial tension (Lutton, E.S. and Stauffer, C.E. and Martion, J.B. and Fehl, A.J. in : Journal of Colloid and Interfacial Science, Vol. 30, No. 3, July 1969).

Since the mix maturation usually takes several hours, it is one of the longest process steps in the production of ice cream or related products. The issue at the base of the invention is to find a way to allow a higher flexibility of ice cream_mix maturation, including a reduced maturation time, while retaining or improving the stability and the texture of the finished, foamed product.

The present invention concerns a process for the preparation of a fat-containing, foamed, frozen confection, wherein said preparation is carried out according to the following steps :
- the ingredients of the ice confection are mixed together,
- said mixture is pasteurised and homogenised or homogenised and pasteurised,
- the homogenised mixture is submitted to a at least two-steps cooling, wherein the first step corresponds to a temperature decrease from the pasteurisation or homogenisation temperature to 10-35 °C and the second step from 10-35 °C to 1 to 10 °C and a holding time of 5 to 30 min. is applied between both cooling steps, wherein the temperature of the mixture is maintained between 10 and 35 °C during this holding time,
- the cooled mixture is maintained at the temperature of around 1 to 10 °C during at least 0.1 hour and
- the cooled mixture is freezed with an incorporation of air or another gas before or during freezing.

The important element in the process according to the invention is a holding time of the ice cream mix at an intermediate temperature prior to the mix maturation. A holding time is required between the first and the second cooling step. This holding time at an intermediate temperature enhances the functionality of the emulsifiers and thereby allows a shorter maturation (or ageing ) time. The normal process procedure is to have a two-step cooling treatment. But, it is also possible to have a three-step cooling or another cooling profile.

For the production of an ice confection the ingredients used are milk derivatives, sugars, other sweeteners, vegetable fats, water, flavorings, stabilisers and emulsifiers. The milk derivatives are the main protein source and can be plain milk, cream, skimmed milk powder or whey-protein powder. For the production of ice-cream the skimmed milk powder and sometimes whey-protein powder are the standard sources of protein.

In the present invention, concerning the fat-containing, foamed, frozen confection we refer to a frozen confection, such as, but not limited to ice-cream, ice desserts like iced milk or frozen yogurt or similar foamed, frozen products, which contain water, air or another gas, fat, carbohydrate (-s) and protein (-s) and may contain other ingredients.

Only vegetable fats are mentioned, because the dairy fats are already mentioned in the milk derivatives. As source of vegetable fat, palm, palmkernel, coconut and other fats are used.The flavorings are any type of flavorings depending on the final desired product. For example, it is possible to use vanilla, chocolate and every type of fruit flavoring. The stabiliser are taken from the group consisting of gelatine or polysaccharides like carrageenan, sodium alginate, sodium carboxymethylcellulose, guar gum, locust bean gum and pectin.

The recipe of the fat-containing, foamed confectionery product of this invention contains fat in an amount of about 1% to about 20%, preferably between 3% to 18%. This fat has to have a solid fat content of between about 60% and 85%, preferably between 65% and 80%, at 5°C.
Furthermore, the recipe contains non-fat milk solids or other sources of protein in an amount of between about 1% to about 15, preferably between 8% to 15% (referred to milk solids with about 35% protein), sugar in an amount of between about 0% to 18%, preferably between 8% to 15%, other oligo- or polysaccharides in an amount of between 0% and 12%, preferably between 5% to 10% , emulsifier in an amount of 0.01 to about 3%, preferably between 0.05% to 0.5% and stabilizer in an amount of about 0.05 to 1%, preferably between 0.1% to 0.5%. The total solids of the mixture of ingredients are between about 10 and 60 %, preferably between 20 and 40%. All percentages are by weight and relative to the total weight of the mix.

The sugar includes normally the lactose naturally present in milk products, but also sucrose, maltose, dextrose, fructose, glucose. It is also possible to use in the ice confection other sweeteners, like artificial sweeteners.

The important element in the process according to the invention is to have this two steps cooling and more particularly to apply between the first and the,second cooling step a holding time. This holding time enhances the functionality of the emulsifiers and thereby allows a shorter maturation (or ageing ) time and a higher final quality.

For the process of the invention, not every type of emulsifier can be used. Only small-molecule surfactants are used : these compounds are distinct from other emulsifying molecules, such as proteins. The emulsifiers used in the process of the invention are taken from the group consisting of mono- and diacyl glycerides of fatty acids, propylene glycol ester and another emulsifier showing a break in the correlation of interfacial tension between oil and water at concentrations between 0.01 and 5 % and over temperatures between about 20 and 40 °C. They are present in the ice confection mixture in the amount of 0.01 to 5 % based on the final composition. The concentration of the emulsifier is preferably between 0.01 and 0.5 %. Other small-molecule emulsifiers, which do not meet the above mentioned characteristics of the break temperature can be used additionally with the basic emulsifier. In the present specification, all the percentages are given in weight. The water content of the ice confection is normally comprised between 45 and 65 %.

The different ingredients of the ice confection are mixed together : first all fluid, then the solid ingredients are blended together at elevated temperature to enable the dissolution and coarse emulsification of the ingredients.

The ice confection mix is treated for microbiological reasons. This is done either before or after the homogenisation step. The mix pasteurisation is usually carried out in a plate heat exchanger at temperatures about 80 °C for 20 to 30 seconds, or at 105 to 130 °C for 1 to 2 seconds. An efficient homogenisation must be carried out at temperature where the fat phase is completely liquid, preferably near the pasteurisation temperature. During homogenisation, the ice confection mix is converted into a true emulsion.

Immediately after the homogenization and pasteurization treatment, the confection mix is submitted to the two-step cooling treatment. The first step corresponds to a temperature decrease from the pasteurization or homogenization temperature to 10-35°C. The time necessary to cool to this intermedium temperature is not critical for this invention, however a-fast cooling is preferred for microbiological and process reasons. The decrease of said temperature is carried out in less than 10 min, preferably in less than 5 min. The temperature after the first cooling step has to be about 5 to 10°C degree's below the characteristic 'break temperature' of the selected emulsifier. The 'break temperature' depends on the type and concentration of the selected emulsifier. As an example, for Glycerol-monostearate at a concentration of 0.1 % the break temperature is 30°C (Lutton, E.S. et al 1969; and Groh, B.F. Fortschritts-Berichte VDI, Reihe 3, Nr. 553, page 112, 1998). The characteristic 'break temperatures', of several emulsifiers at various concentrations can be found in Lutton et. al 1969.

The important feature for the process of the invention is the 'holding time between the first and the second cooling step. A holding time of 5 to 30 min, preferably 10 to 20 min. is applied, because it enhances the functionality of the emulsifiers, which speed-up the necessary processes during the maturation time and thereby allow for a shorter maturation time.

During the second cooling step the temperature of the ice confection mix is further decreased from 10-35 °C to the maturation temperature of 1 to 10 °C. As for the first cooling step, this cooling time is not critical for the invention. However, a fast cooling is preferred for microbiological and process reasons. The cooling is carried out in less than 10 min, preferably in less than 5 min. The processed confection mix is then maintained at the maturation temperature during a period comprised between 0.1 and 24 hours, preferably 0.5 and 4 hours.

After the maturation time, the processed confection mix is whipped, gas is incorporated into the mix while it may be further cooled to a temperature decrease to around -3.5 to -7 °C, which results in a soft, pasty-like consistency (for high temperatures) or a stiff, shape retaining consistency (for low temperatures). During a continuous freezing process, if applied, rotating knifes continuously scrape ice forming from the cooled mixture off the inner wall of a tube and help to incorporate the air or other gas. The air or other gaze incorporation may also occur before the freezing. Whipping and freezing allows to prepare a frozen confection, wherein the volume of air is comprised between 10 and 200%, preferably between 20% and 120%. In this case, the percentage is given in volume of the whole composition.

After whipping and freezing, the freshly produced confection has a stiff, pastry-like consistency and can be filled in different forms such as cups, cones or moulds for sticks, or in bulk containers.

The confection is then frozen: it is hardened as quickly as possible to reach a final temperature around -20°C. The ice confection can then be stored at -20 to -35 °C for the normal shelf-life of ice confection products.

According to analysis made on the product of the invention, the median air bubble size in the samples are slightly smaller than the reference samples, that means the samples produced through a normal procedure with a maturation time of 4 hours. The samples furthermore presents a relative high microstructural stability when produced with a maturation time of one hour and a holding time of 15 min.

The process following this invention offers several benefits compared to the traditional process with the long maturation time :
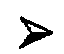 It requires less capacity of maturation tanks. This saves' capital investment for the tanks and requires less space in the production area
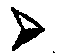 It offers a faster and therefore less expensive process
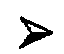 It offers a higher operational flexibility and allows a faster response to unforeseen or changed mix production (important for seasonal products like ice cream)
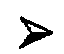 The confectionery products referred to in this invention, often contain fresh ingredients, such as milk, cream and/or fresh flavoring ingredients, can be processed faster and will result therefor in fresher final products.

With a significantly reduced maturation time this invention offers the same or very similar handling characteristics (whipping and/or freezing behavior of the processed and cooled mix) as compared to the traditional process with several hours of maturation. Furthermore,
it offers the same or very similar filling/packaging characteristics and the same or a very similar final quality (texture and stability) compared to traditionally produced products.

The invention is further explained by referring to the following example describing in detail the method of the present invention.

### Example 1

The following recipe was used to prepare an ice-cream mix :

| | |
|---|---|
| Skimmed milk powder ( with 33 % protein) | 10 % |
| Sucrose | 15 % |
| Glucose | 5 % |
| Fat, hydrogenated (60% coconut/ 40% palmkernel) | 10 % |
| Na-alginate (as stabilizer) | 0.3 % |
| Monodiglyceride(as emulsifier with a Glycerol-mono stearate content of > 90%) | 0.2 % |
| Water (65°C) | 59.5 % |

In preparation of the blending the stabilizer was mixed with the sugar and the emulsifier dissolved in the liquid fat (60°C). All the powders and then the fat phase were added, while stirring, to the hot water. The mix was then pasteurized at a temperature of 87°C, for 30 seconds. After that the mix was homogenized at a temperature of 77°C in a two stage homogenizor. The mix was cooled in a plate-heat exchanger down to 25 °C and this temperature was maintained for 15 min. Finally, the mix was cooled with a plate heat exchanger to a temperature of 4 °C and maintained at this temperature for a maturation of one hour. After the maturation time the ice cream was frozen in a continuous ice cream freezer to a draw temperature of -5°C with an air incorporation to achieve 80 % overrun. The ice cream was filled in cups and hardened at -30°C for six hours.

The obtained product was compared to a product produced from the same ingredients with the same process, except for a single step cooling step before a maturation time of 24 hours.
No significant differences were found comparing these two products, fresh and after a heat shock treatment for their melting behavior, their fat particle profile and their sensorial impression.

## Claims

1. A process for the preparation of a fat-containing, foamed, frozen confection, wherein said preparation is carried out according to the following steps :
- the ingredients of the fat-containing confection are mixed together,
- said mixture is pasteurised and homogenised or homogenised and pasteurised,
- the homogenised mixture is submitted to a at least two-steps cooling, wherein the first step corresponds to a temperature decrease from the pasteurisation or homogenisation temperature to 10-35 °C and the second step from 10-35 °C to 1 to 10 °C and a holding time of 5 to 30 min. is applied between both cooling steps, wherein the temperature of the mixture is maintained between 10 and 35 °C during this holding time,
- the cooled mixture is maintained at the temperature of 1 to 10 °C during at least 0.1 hour and
- the cooled mixture is freezed with an incorporation of air or another gas before or during freezing.

2. A process according to claim 1, wherein the ingredients of the ice confection are milk derivatives, sugars, other sweeteners, vegetable fats, water, flavorings, stabilisers and emulsifiers.

3. A process according to claim 2, wherein the emulsifiers are taken from the group consisting of mono- and diacyl glycerides of fatty acids, propylene glycol ester and other emulsifier showing a break in the correlation of interfacial tension between oil and water at concentrations between 0.01 and 5 % and over temperatures between about 20 and 40 °C.

4. A process according to claim 3, wherein the amount of emulsifiers is comprised between 0.01 and 0.5 %.

5. A process according to any of claims 1 to 4, wherein the first step of the cooling is carried out in less than 10 min.

6. A process according to any of claims 1 to 5, wherein the second step of the cooling is carried out during less than 10 min.

7. A process according to any of claims 1 to 6, wherein the ice confection contains from 20 to 200 % in volume of air.

8. A process according to any of claims 1 to 7, wherein the cooled mixture is maintained at a temperature of around 1 to 10 °C during 0.1 to 4 hours.

## Patentansprüche

1. Verfahren zur Herstellung einer fetthaltigen, geschäumten, gefrorenen Süßware, wobei diese Herstellung gemäß den folgenden Stufen durchgeführt wird:
- die Bestandteile der fetthaltigen Süßware werden vermischt,
- diese Mischung wird pasteurisiert und homogenisiert oder homogenisiert und pasteurisiert,
- die homogenisierte Mischung wird einem wenigstens zweistufigen Kühlen unterzogen, wobei die erste Stufe einer Temperaturverminderung von der Pasteurisierungs- oder Homogenisierungstemperatur auf 10-35°C und die zweite Stufe von 10 bis 35°C auf 1 bis 10°C entspricht, und wobei eine Haltezeit von 5 bis 30 min zwischen den beiden Kühlstufen angewandt wird, wobei während dieser Haltezeit die Temperatur der Mischung zwischen 10 und 35°C gehalten wird,
- die gekühlte Mischung wenigstens 0,1 h bei der Temperatur von 1 bis 10°C gehalten wird und
- die gekühlte Mischung unter Einarbeitung von Luft oder einem anderen Gas vor oder während des Gefrierens gefroren wird.

2. Verfahren nach Anspruch 1, wobei die Zutaten der Eis-Süßware Milchderivate, Zucker, andere Süßungsmittel, Pflanzenfette, Wasser, Aromastoffe, Stabilisatoren und Emulgatoren sind.

3. Verfahren nach Anspruch 2, wobei die Emulgatoren aus der Gruppe gewählt werden, die besteht aus Mono- und Diacylglyceriden von Fettsäuren, Propylenglycolester und irgendeinem anderen Emulgator, die einen Bruch bei der Korrelation der Grenzflächenspannung zwischen Öl und Wasser bei Konzentrationen zwischen 0,01 und 5% und innerhalb von Temperaturen zwischen etwa 20 und 40°C zeigt.

4. Verfahren nach Anspruch 3, wobei die Menge an Emulgatoren zwischen 0,01 und 0,5% liegt.

5. Verfahren nach irgendeinem der Ansprüche 1 bis 4, wobei der erste Schritt des Kühlens in weniger als 10 min durchgeführt wird.

6. Verfahren nach irgendeinem der Ansprüche 1 bis 5, wobei der zweite Schritt des Kühlens innerhalb von weniger als 10 min durchgeführt wird.

7. Verfahren nach irgendeinem der Ansprüche 1 bis 6, wobei die Eis-Süßware von 20 bis 200 Vol.-% Luft enthält.

8. Verfahren nach irgendeinem der Ansprüche 1 bis 7, wobei die gekühlte Mischung für 0,1 bis 4 h bei einer Temperatur von etwa 1 bis 10°C gehalten wird.

## Revendications

1. Procédé pour la préparation d'un produit de confiserie glacé, en mousse, contenant une matière grasse, dans lequel ladite préparation est effectuée par les étapes suivantes :
- les ingrédients du produit de confiserie contenant une matière grasse sont mélangés les uns aux autres,
- ledit mélange est pasteurisé et homogénéisé ou bien est homogénéisé et pasteurisé,
- le mélange homogénéisé est soumis à un refroidissement en au moins 2 étapes, dans lequel la première étape correspond à un abaissement de température de la température de pasteurisation ou d'homogénéisation jusqu'à 10-35°C et la seconde étape correspond à un abaissement de température de 10-35°C jusqu'à 1-10°C et, un temps de maintien de 5 à 30 minutes est appliqué entre les deux étapes de refroidissement, la température du mélange étant maintenue dans l'intervalle de 10 à 35°C au cours de ce temps de maintien,
- le mélange refroidi est maintenu à la température de 1 à 10°C pendant au moins 0,1 heure, et
- le mélange refroidi est congelé avec incorporation d'air ou d'un autre gaz avant ou pendant la congélation.

2. Procédé suivant la revendication 1, dans lequel les ingrédients du produit de confiserie consistant en une glace sont des dérivés de lait, des sucres, d'autres agents édulcorants, des matières grasses végétales, l'eau, des agents aromatisants, des stabilisants et des émulsionnants.

3. Procédé suivant la revendication 2, dans lequel les émulsionnants sont choisis dans le groupe consistant en des mono- et diacyl-glycérides d'acides gras, un ester de propylèneglycol et un autre émulsionnant présentant une rupture de corrélation de la tension interfaciale entre l'huile et l'eau à des concentrations entre 0,01 et 5% et à des températures comprises dans l'intervalle de 20 à 40°C.

4. Procédé suivant la revendication 3, dans lequel la quantité d'émulsionnants est comprise dans l'intervalle de 0,01 à 0,5%.

5. Procédé suivant l'une quelconque des revendications 1 à 4, dans lequel la première étape du refroidissement est mise en oeuvre en un temps inférieur à 10 minutes.

6. Procédé suivant l'une quelconque des revendications 1 à 5, dans lequel la seconde étape du refroidissement est mise en oeuvre en un temps de moins de 10 minutes.

7. Procédé suivant l'une quelconque des revendications 1 à 6, dans lequel le produit de confiserie consistant en une glace contient 20 à 200% en volume d'air.

8. Procédé suivant l'une quelconque des revendications 1 à 7, dans lequel le mélange refroidi est maintenu à une température d'environ 1 à 10°C pendant un temps de 0,1 à 4 heures.
